# EUROPÄISCHE PATENTSCHRIFT

(11) **EP 0 575 340 B1**
(45) Veröffentlichungstag und Bekanntmachung des Hinweises auf die Patenterteilung: **10.07.1996**
(21) Anmeldenummer: 92902951.0
(22) Anmeldetag: 31.01.1992
(51) Int. Cl.: F16K 1/48

(54) **VENTIL, VORZUGSWEISE VAKUUMVENTIL**
VALVE, PREFERABLY A VACUUM VALVE
SOUPAPE, DE PREFERENCE SOUPAPE A VIDE

(30) Priorität: 04.03.1991 DE 4106762
(43) Veröffentlichungstag der Anmeldung: 29.12.1993
(73) Patentinhaber: LEYBOLD AKTIENGESELLSCHAFT, D-63450 Hanau (DE)
(72) Erfinder: CONTZEN, Franz-Peter, D-5000 Köln 30 (DE); GANSER, Dieter, D-4154 Tönesvorst 2 (DE); KERSKEN, Heinz-Hermann, D-5000 Köln 80 (DE); KIRCHNER, Hans, D-5000 Köln 51 (DE)
(74) Vertreter: Leineweber, Jürgen, Dipl.-Phys.
(86) Internationale Anmeldenummer: EP9200207
(87) Internationale Veröffentlichungsnummer: WO9215809

(56) Entgegenhaltungen:
- EP-A- 0 173 115
- CH-A- 515 440
- DE-A- 1 098 312
- DE-A- 2 341 336
- DE-B- 2 426 942
- US-A- 1 111 391
- US-A- 1 236 939
- US-A- 2 479 688
- US-A- 3 241 805
- US-A- 3 815 873

## Beschreibung

Die Erfindung bezieht sich auf ein Ventil, vorzugsweise Vakuumventil, mit einem Ventilstempel und einem am Stempel mittels eines Sprengringes gehalterten Ventilteller.

Ventile der hier betroffenen Art werden mit den verschiedensten Nennweiten und mit mehreren Antrieben auf dem Markt angeboten. Die Herstellung derartiger Ventile erfolgt deshalb - soweit möglich - nach dem Baukastenprinzip.

Bekannte Ventile bestehen im wesentlichen aus drei Baugruppen, nämlich aus einem Ventilgehäuse mit einem Ventilsitz, einem Ventilantrieb sowie einem Ventil-Innenteil mit einem Ventilstempel, einem daran gehalterten Ventilteller und häufig noch einem Federbalg. Die Ventilantriebe können mechanisch betätigbar sein. Üblich ist dabei die Verwendung von Drehknöpfen. Je nach dem, ob die Öffnungs- und Schließbewegung schnell oder langsam durchgeführt werden soll, sind diese mechanischen Antriebe unterschiedlich gestaltet. Außerdem sind pneumatisch, elektro-pneumatisch und elektro-magnetisch betätigbare Ventile bekannt. Vakuumventile der hier betroffenen Art sind beispielsweise in der Broschüre "ventile" offenbart, bekannt, welche Bestandteil des Katalogs HV 200, Teil 6, Auflage 08/86 der Anmelderin ist.

Insbesondere bei Vakuumventilen werden an die Verbindung zwischen dem Stempel und dem Ventilteller hohe Anforderungen gestellt. Die Verbindung muß stabil und sicher sein, um relativ große Kräfte übertragen zu können. Diese sind sowohl zur Erzeugung hoher Schließdrücke als auch beim Öffnungsvorgang erforderlich, da die Öffnungsbewegung in der Regel entgegen einer in Schließrichtung wirkenden Feder, entgegen einer Druckdifferenz von mindestens einem bar und häufig auch noch entgegen den Federkräften eines metallischen Faltenbalges ausgeführt werden muß. Gleichzeitig müssen aber geringfügige Schwenkbewegungen des Ventiltellers möglich sein, um eine gleichmäßige Verteilung der Schließkräfte über die ringförmige Dichtfläche zu erzielen. Schließlich sollen die Verbindungsmittel kostengünstig herstellbar und einfach montierbar sein.

Bei den bekannten Ventilen sind der Ventilteller oder der Stempel kopfartig gestaltet (vgl. die EP-A-173 115). Am jeweils anderen Bauteil ist ein Rand ausgebildet, der zur Herstellung der Verbindung zwischen Stempel und Ventil umgebördelt bzw. eingerollt wird und im zusammengebauten Zustand den Kopf des anderen Bauteils umfaßt. Zur Herstellung dieser Verbindung ist ein Einwalz-Vorgang erforderlich, der nicht automatisiert werden kann. Außerdem muß dieser Einwalz-Vorgang aus Platzgründen vor der vakuumdichten Verbindung des Ventiltellers mit einem Balg ausgeführt werden.

Da der Ventilstempel jeweils mit den unterschiedlichen Antrieben gekoppelt werden muß, ist es erforderlich, unterschiedlich gestaltete, den jeweiligen Antrieben angepaßte Ventilstempel einzusetzen. Da aber die Ventilstempel Bestandteil der VentilInnenteile sind, ergibt sich für die Fertigung nach dem Baukastenprinzip die Notwendigkeit, daß eine Vielzahl von Ventil-Innenteilen - für jede der hergestellten Nennweiten je ein für jeden der hergestellten Antriebe passendes Innenteil - hergestellt und jeweils in größerer Anzahl am Lager bereitgehalten werden muß.

Den nächstliegenden Stand der Technik bildet der Inhalt der DE-B-10 98 312. Bei dem in dieser Schrift offenbarten Ventil ist der Ventilteller über eine Sprengring-Verbindung am Ventilstempel gehaltert. Eine über den Umfang der Ventildichtung gleichmäßige Kraftverteilung, die insbesondere bei Vakuumventilen erforderlich ist, ist bei diesem Ventil nach dem Stand der Technik nicht immer gewährleistet.

Der vorliegenden Erfindung liegt die Aufgabe zugrunde, die bei einem Ventil der eingangs erwähnten Art vorgesehene Sprengring-Verbindung zwischen Ventilstempel und Ventilteller so zu gestalten, daß eine gleichmäßige Verteilung der Dichtkraft sichergestellt ist.

Erfindungsgemäß wird diese Aufgabe durch die im kennzeichnenden Teil des Patentanspruchs 1 enthaltenen Maßnahmen gelöst. Infolge dieser Maßnahmen ist sichergestellt, daß Ventilstempel und Ventilteller im Schließzustand des Ventils stets eine optimale Stellung zueinander haben, sodaß sich die Schließkraft stets gleichmäßig über den Umfang der Ventildichtung verteilt.

Durch die Erfindung ist die Herstellung der Verbindung zwischen Stempel und Ventilteller besonders einfach. Ein Einwalz-Vorgang entfällt. Auch wenn ein Balg vorhanden ist, kann die Verbindung erst bei der Endmontage ohne besonderen Kraftaufwand vorgenommen werden. Dadurch ist es im Rahmen des Baukastensystems möglich, den Stempel jeweils dem Antrieb zuzuordnen und nicht mehr dem Ventilinnenteil. Ein weiterer besonderer Vorteil liegt darin, daß die vorgeschlagene Verbindung zwischen Stempel und Ventilteller Drehbewegungen des Stempels - selbst bei hoher Belastung - ohne weiteres zuläßt. Die Ventilinnenteile ohne Stempel können deshalb bei jedem der vorkommenden Antriebe eingesetzt werden, unabhängig davon, ob sich der Stempel während der Betätigung des Ventiles dreht oder nicht, so daß die Anzahl der am Lager bereitzuhaltenden Bauteile erheblich reduziert ist.

Weitere Vorteile und Einzelheiten der Erfindung sollen anhand von in den Figuren 1 bis 4 dargestellten Ausführungsbeispielen erläutert werden. Es zeigen
- Figuren 1 und 2 Beispiele für ein Ventil mit Sprengring-Verbindungen zwischen dem Ventilstempel und - abweichend von der Erfindung - dem Ventilteller selbst sowie
- Figuren 3 und 4 ein Ausführungsbeispiel für ein Ventil, das erfindungsgemäß je eine Sprengring-Verbindung zwischen seinem Stempel und einem Ringbauteil sowie zwischen dem Ringbauteil und seinem Teller aufweist.

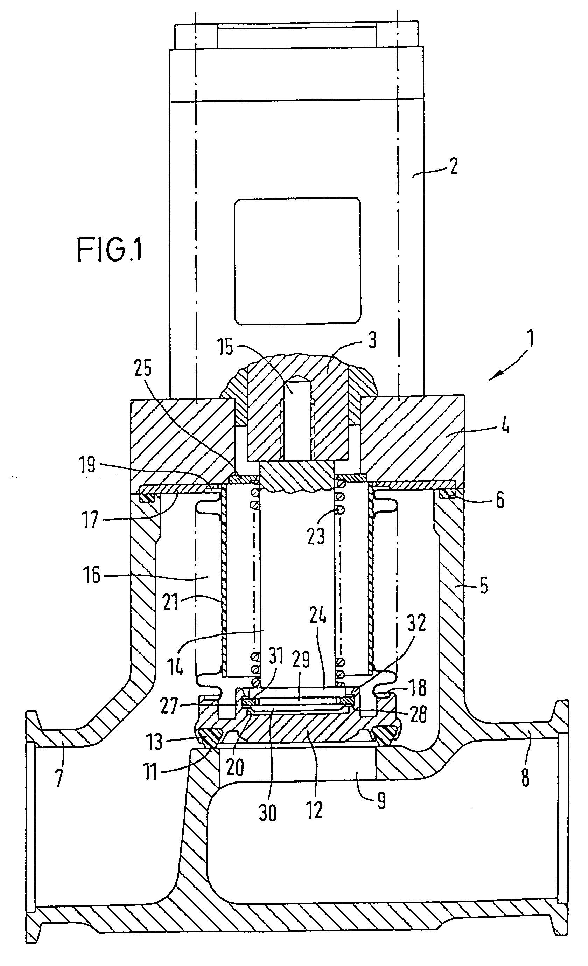

Das in Figur 1 dargestellte Ventil 1 umfaßt den elektromagnetischen Antrieb 2, von dem im wesentlichen nur der Anker 3 sichtbar ist. An einem flanschartigen Rand 4 des Antriebs 2 ist das Ventilgehäuse 5 befestigt. In die dem Rand 4 zugewandte Stirnseite des Ventilgehäuses 5 ist der Dichtring 6 eingelassen, so daß die Verbindung vakuumdicht ist. Das Ventilgehäuse 5 weist zwei Anschlußstutzen 7 und 8 auf, die über die Öffnung 9 miteinander verbindbar sind. Der obere Rand der Öffnung 9 bildet einen Ventilsitz 11. Dem Ventilsitz 11 und damit der Öffnung 9 ist der Ventilteller 12 mit dem Dichtring 13 zugeordnet. Der Ventilteller 12 ist am unteren Ende des Ventilstempels 14 gehaltert. Das obere Ende des Ventilstempels 14 ist über einen Gewindestutzen 15 in den Anker 3 des Ventilantriebs 2 eingeschraubt.

Um den Innenraum des Antriebs 2 dicht vom Innenraum des Ventilgehäuses 5 zu trennen, ist ein Metallbalg 16 vorgesehen, der sich zwischen dem Ventilteller 12 und einer Ringscheibe 17 erstreckt. Sowohl der Ventilteller 12 als auch die Ringscheibe 17 weisen Eindrehungen 18 bzw. 19 auf, in die der Balg 16 eingelötet oder eingeschweißt und damit vakuumdicht mit diesen Bauteilen verbunden ist. Der Außenrand der Ringscheibe 17 befindet sich zwischen dem Flansch 4 des Antriebs 2 und der Stirnseite des Ventilgehäuses 5 und erstreckt sich bis in den Bereich des Dichtringes 6, so daß auch in diesem Bereich die Dichtheit gewährleistet ist. Mit 21 ist noch ein Schlauchabschnitt bezeichnet, der dem Balg 16 von innen anliegt und eine Dämpfung von Balgschwingungen bewirkt.

Den Ventilstempel 14 umgibt eine Schraubenfeder 23. Diese erstreckt sich zwischen einer Durchmessererweiterung 24 des Stempels 14 im Bereich des Tellers 12 und einer Ringscheibe 25, die sich am Flanschrand 4 des Antriebs 2 abstützt. Die Schraubenfeder 23 ist als Druckfeder ausgebildet und bewirkt, daß der Teller 12 bei stromlosem Antrieb 2 seine Schließstellung einnimmt. Unter Strom zieht der Antrieb 2 den Stempel 14 an, so daß der Teller 12 die Öffnung 9 freigibt.

Zur Ausbildung einer Verbindung zwischen dem Ventilteller 12 und dem Ventilstempel 14 ist der Ventilteller 12 mit einem sich in Richtung Ventilstempel 14 erstreckenden Rohransatz 27 ausgerüstet. Seine im wesentlichen zylindrische Innenfläche 20 weist eine durch Hinterdrehung entstandene Innennut 28 auf. Korrespondierend zu dieser Nut 28 ist die Außenfläche 30 des unteren stumpfartigen Endes des Ventilstempels 14 mit einer Nut 29 versehen. In diese Nuten 28 und 29 greift ein sich ausdehnender Sprengring 31 mit rechteckförmigen Querschnitt ein und bewirkt damit die gegenseitige Festlegung in Bezug auf beide Richtungen der axialen Bewegungsmöglichkeiten.

Die Herstellung der Verbindung erfolgt in der Weise, daß der Ventilstempel 14 mit in die Nut 29 eingelegtem Sprengring 31 in den Rohransatz 27 eingeschoben wird. Um während dieser Montage das Zusammendrücken des Sprengringes 31 zu erleichtern, ist der der Nut 28 vorgelagerte Bereich 32 der Innenfläche 20 des Rohransatzes 27 derart konisch gestaltet, daß der Innendurchmesser des Rohransatzes 27 in Richtung Nut 28 abnimmt. Ist eine konische Ausbildung nicht möglich, kann auch ein entsprechend ausgebildetes Rohr als Montagehilfe eingesetzt werden. Im Bereich der Nut 28 im Rohransatz 27 dehnt sich der Sprengring 31 aus und nimmt eine Stellung mit vergrößertem Durchmesser ein, so daß eine nicht mehr lösbare Verbindung zwischen Ventilstempel 14 und Ventilteller 12 hergestellt ist.

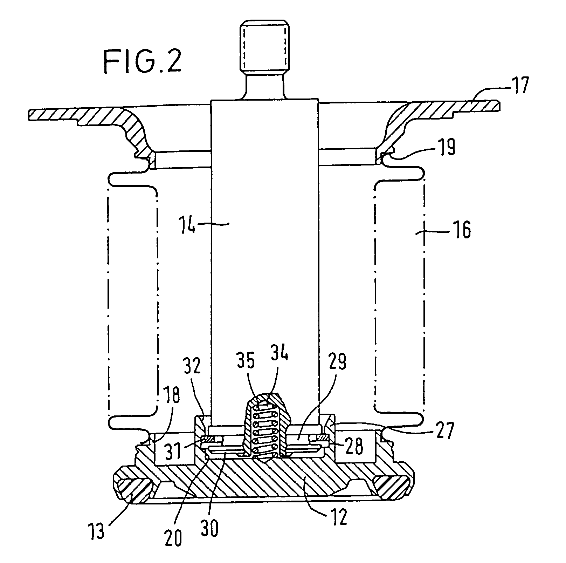

Beim Ausführungsbeispiel nach Figur 2, bei dem nur wesentliche Bauteile eines erfindungsgemäß ausgebildeten Ventils dargestellt sind, sind die Breiten der Nuten 28, 29 größer gewählt als die Dicke des Sprengringes 31. Die Verbindung zwischen Ventilstempel 14 und Ventilteller 12 hat dadurch etwas Spiel. Zur Verhinderung schädlicher Spielbewegungen ist eine Druckfeder 34 vorgesehen, die sich auf dem Ventilteller 12 abstützt und in eine Sackbohrung 35 im Ventilstempel 14 hineinragt.

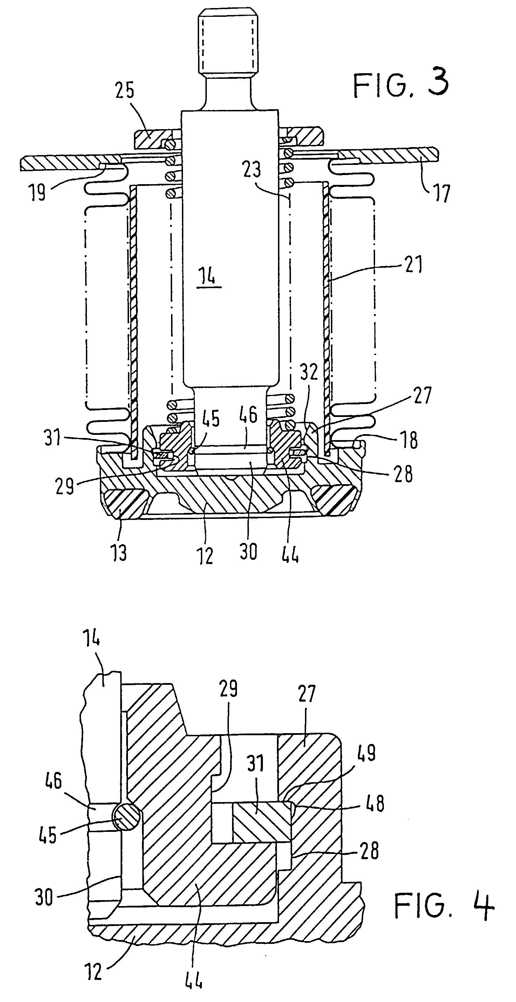

Die Figuren 3 und 4 zeigen ein Ausführungsbeispiel mit Verbindungsmitteln, wie sie in den Figuren 1 und 2 dargestellt sind. Unterschiedlich ist, daß die den rechteckigen Sprengring 31 aufnehmende Außennut 29 nicht am Ventilstempel 14 selbst sondern an einem separaten Ringbauteil 44 vorgesehen ist. Das Ringbauteil 44 ist seinerseits mit Hilfe des sich zusammenziehenden Sprengringes 45 und der Nut 46 am unteren Ende des Ventilstempels 14 festgelegt. Bei einer Bewegung des Ventilstempels 14 nach oben überträgt der Sprengring 45 diese Bewegung auf das Ringbauteil 44. Über den Sprengring 31 erfolgt die Übertragung der Bewegung auf den Ventilteller 12. Diese Kostruktion dient besonders bei großen Nennweiten beim Schließen zur optimalen Kraftverteilung auf den Ring 31 sowie beim Öffnen zur Erzielung einer optimalen Stellung von Stempel 14 zu Teller 12, so daß Winkelabweichungen (Stempel, Teller) vermieden sind.

Dem vergrößerten Teilschnitt entsprechend Figur 4 ist entnehmbar, daß die Innennut 28 am Rohransatz 27 mit einer taschenförmigen Hinterdrehung 48 ausgerüstet ist, welche unmittelbar mit dem dem Teller 12 abgewandten Rand 49 der Innennut 28 beginnt. Sie erstreckt sich über einen Bereich, der kleiner ist als die Dicke des Sprengringes 31. Dadurch wird zum einen erreicht, daß der Sprengring dem Rand 49 exakt anliegt und damit hohe Kräfte an dieser Stelle übertragbar sind. Zum anderen ist der Sprengring 21 vom übrigen Teil der Nut 28 geführt und damit eine unerwünschte Ausdehnung verhindert.

## Patentansprüche

1. Ventil, vorzugsweise Vakuumventil, mit einem Ventilstempel (14) und einem am Stempel mittels eines Sprengringes gehalterten ventilteller (12), dadurch gekennzeichnet, daß ein das untere Ende des Ventilstempels (14) umgebendes Ringbauteil (44) vorgesehen ist und daß sowohl das Ringbauteil (44) am Ventilstempel (14) als auch der Ventilteller (12) am Ringbauteil (44) mit Hilfe von Sprengringen (31, 45) festgelegt sind.

2. Ventil nach Anspruch 1, dadurch gekennzeichnet, daß sich der Ventilstempel (14) mit einem stumpfartig gestalteten Abschnitt (30) in das Ringbauteil (44) erstreckt, daß der Abschnitt (30) mit einer Außennut (46) für einen sich zusammenziehenden Sprengring (45) ausgerüstet ist, daß das Ringbauteil (44) mit einer Innendurchmessererweiterung ausgerüstet ist und daß die Abmessungen des Ringbauteiles (44) oberhalb und unterhalb der Innendurchmessererweiterung einerseits sowie des Außendurchmessers des in der Außennut (46) befindlichen Sprengringes (45) andererseits so gewählt sind, daß der Innendurchmesser des Ringbauteiles (44) oberhalb der Innendurchmessererweiterung kleiner und unterhalb der Innendurchmessererweiterung größer als der Außendurchmesser des in der Außennut befindlichen Sprengringes (45) ist.

3. Ventil nach Anspruch 1 oder 2, dadurch gekennzeichnet, daß der Ventilteller (12) mit einem das Ringbauteil (44) umgebenden Rohransatz (27) ausgerüstet ist und daß die dem Ringbauteil (44) zugewandte Fläche des Rohransatzes (27) mit einer rechteckigen Innennut (28) ausgerüstet sind, in die ein sich ausdehnender, im Querschnitt rechteckförmiger Sprengring (31) eingreift.

4. Ventil nach Anspruch 3, dadurch gekennzeichnet, daß die Außennut (28) mit einer taschenförmigen Hinterdrehung (48) ausgerüstet ist, deren eine axiale Begrenzung in der Ebene des dem Ventilteller abgewandten Randes (49) der rechteckigen Innennut (28) liegt und deren axiale Ausdehnung kleiner ist als die Dicke des Sprengringes (31).

5. Ventil nach einem der vorhergehenden Ansprüche, dadurch gekennzeichnet, daß zur Verhinderung schädlicher Spielbewegungen zwischen Ventilstempel (14) und Ventilteller (12) eine Druckfeder angeordnet ist.

## Claims

1. Valve, preferably a vacuum valve, having a valve plunger (14) and a valve disc (12) held on the plunger by means of a snap ring, characterized in that an annular structural part (44) surrounding the bottom end of the valve plunger (14) is provided and that with the aid of snap rings (31, 45) both the annular structural part (44) is fixed on the valve plunger (14) and the valve disc (12) is fixed on the annular structural part (44).

2. Valve according to claim 1, characterized in that the valve plunger (14) extends with a portion (30) fashioned in the manner of a stub into the annular structural part (44), that the portion (30) is equipped with an external groove (46) for a contracting snap ring (45), that the annular structural part (44) is equipped with an inside diameter enlargement and that the dimensions of the annular structural part (44) above and below the inside diameter enlargement, on the one hand, and above and below the outside diameter of the snap ring (45) situated in the external groove (46), on the other hand, are so selected that the inside diameter of the annular structural part (44) above the inside diameter enlargement is smaller and below the inside diameter enlargement is greater than the outside diameter of the snap ring (45) situated in the external groove.

3. Valve according to claim 1 or 2, characterized in that the valve disc (12) is equipped with a tubular projection (27) which surrounds the annular structural part (44) and that the surface of the tubular projection (27) facing towards the annular structural part (44) are [sic] equipped with a rectangular internal groove (28), into which engages an expanding snap ring (31) which is rectangular in cross section.

4. Valve according to claim 3, characterized in that the external groove (28) is equipped with a pocket-like relief (48), of which one axial delimitation lies in the plane of the edge (49) of the rectangular internal groove (28) remote from the valve disc and the axial extension is smaller than the thickness of the snap ring (31).

5. Valve according to one of the preceding claims, characterized in that a pressure spring is disposed for preventing damaging backlash movements between valve plunger (14) and valve disc (12).

## Revendications

1. Vanne, de préférence vanne à vide comprenant une tige de soupape (14) et un plateau de soupape (12) fixé à la tige au moyen d'une bague d'arrêt élastique, caractérisée en ce qu'il est prévu un élément annulaire (44) qui entoure l'extrémité inférieure de la tige de soupape (14), et en ce que l'élément annulaire (44) est fixé à la tige de soupape (14) et le plateau de soupape (12) à l'élément annulaire (44) par des bagues d'arrêt élastiques (31, 45).

2. Vanne selon la revendication 1, caractérisée en ce que la tige de soupape (14) est engagée dans l'élément annulaire (44) par un segment (30) de forme tronquée, en ce que le segment (30) est muni d'une gorge extérieure (46) recevant une bague d'arrêt élastique (45) qui se resserre, en ce que l'élément annulaire (44) est muni d'un élargissement de diamètre intérieur et en ce que les dimensions de l'élément annulaire (44) au-dessus et au-dessous de l'élargissement de diamètre intérieur, d'une part, ainsi que celle du diamètre extérieur de la bague d'arrêt élastique (45) placée dans la gorge extérieure (46), d'autre part, sont choisies de manière que le diamètre intérieur de l'élément annulaire (44) soit plus petit que le diamètre extérieur de la bague d'arrêt élastique (45) placée dans la gorge extérieure au-dessus de l'élargissement de diamètre intérieur et plus grand que ce diamètre au-dessous de l'élargissement de diamètre intérieur.

3. Vanne selon la revendication 1 ou 2, caractérisée en ce que le plateau de soupape (12) est équipé d'un prolongement tubulaire (27) qui entoure l'élément annulaire (44) et en ce que la surface du prolongement tubulaire (27) dirigée vers l'élément annulaire (44) est équipée d'une gorge intérieure rectangulaire (28), dans laquelle s'engage une bague d'arrêt élastique (31) qui se dilate, de forme rectangulaire en section transversale.

4. Vanne selon la revendication 3, caractérisée en ce que la gorge extérieure (28) est munie d'un rentrant (48) en forme de poche dont une limitation axiale se trouve dans le plan du bord (49) de la gorge intérieure rectangulaire (28) qui est le plus éloigné du plateau de soupape et dont la dimension axiale est plus petite que l'épaisseur de la bague d'arrêt élastique (31).

5. Vanne selon une des revendications précédentes, caractérisée en ce qu'un ressort de compression est interposé entre la tige de soupape (14) et le plateau de soupape (12) pour empêcher les mouvements de jeu préjudiciables.
